# EUROPEAN PATENT SPECIFICATION

(11) **EP 2 346 217 B1**
(45) Date of publication and mention of the grant of the patent: **30.03.2016**
(21) Application number: 09823066.7
(22) Date of filing: 27.10.2009
(51) Int. Cl.: H04L 29/06, H04L 29/12, H04L 12/851, H04L 29/08

(54) **Method, device and system for identifying an IPv6 session**
Verfahren, Vorrichtung und System zur Identifikation einer IPv6-Sitzung
Procédé, dispositif et système d'identification d'une session IPv6

(30) Priority: 31.10.2008 CN 200810172313
(43) Date of publication of application: 20.07.2011
(73) Proprietor: Huawei Technologies Co., Ltd., Longgang District Shenzhen, Guangdong 518129 (CN)
(72) Inventor: ZHENG, Ruobin, Shenzhen Guangdong 518129 (CN)
(74) Representative: Thun, Clemens
(86) International application number: PCT/CN2009/074628
(87) International publication number: WO 2010/048874

(56) References cited:
- WO-A1-2007/076883
- WO-A1-2009/138034
- CN-A- 1 965 541
- US-A1- 2003 221 016
- US-A1- 2005 204 062
- US-A1- 2006 159 100
- US-A1- 2007 113 269
- US-A1- 2007 283 141
- MICLEA H: "The evolution from PPPoE to IPoE sessions", SWINOG 15, BERN, CH , 4 December 2007 (2007-12-04), pages 1-34, XP002607324, Retrieved from the Internet: URL:http://www.swinog.ch/meetings/swinog15 /The_Evolution_from_PPPoE_to_IPoE_sessions .pdf [retrieved on 2010-10-27]
- "Session ID", , 2 July 2014 (2014-07-02), Retrieved from the Internet: URL:http://en.wikipedia.org/wiki/Session_I D [retrieved on 2014-08-13]
- "Dynamic Host Configuration Protocol", , 4 August 2014 (2014-08-04), Retrieved from the Internet: URL:http://en.wikipedia.org/wiki/Dynamic_H ost_Configuration_Protocol [retrieved on 2014-08-13]

## Description

### FIELD OF THE INVENTION

The present invention relates to the field of communications technologies, and in particular, to a method, a device, and a system for identifying an Internet Protocol (IP) session.

### BACKGROUND OF THE INVENTION

In an access network, an IP session represents a network access connection session associated with an IP address of a subscriber or user equipment, and the IP session is similar to a Point-to-Point Protocol (PPP) session (PPP session). The IP session and the PPP session are collectively referred to as subscriber sessions. The PPP session adopts a specific PPP keepalive detection mechanism, and the IP version 4 (IPv4) session adopts a specific Bidirectional Forwarding Detection (BFD)/Address Resolution Protocol (ARP) keepalive detection mechanism.

The IP session is generally terminated at an IP edge device, for example, a Broadband Network Gateway (BNG) or Broadband Remote Access Server (BRAS), and the other side of the IP session is generally terminated at a user equipment (UE), for example, a Home Gateway (HGW) or a user terminal equipment after the HGW, that is, the IP session is a session connection established between the UE and the IP edge device.

The IP session is used for the management of a network when a subscriber accesses the network, such as, accounting and state.

The prior art has the following disadvantages:
The data communication process is separated with the authentication process or the IP address configuration process of the IP session in the prior art, so an attacker may impersonate an valid sender by forging an IP address or a Media Access Control (MAC) address during the data communication process of the IP session even if the authentication is passed, causing high risks to the security.

Document US 2005/0204062 A1 discloses that in response to arrival of a packet requesting the allocation of an IP address, a DHCP server performs a predetermined procedure between itself and a sender user terminal using packets and allocates an IP address to the user terminal from among IP addresses prepared in advance. Then, the DHCP server registers the allocated IP address, an MAC address of the allocated user terminal, and a line number of this user terminal
in the DHCP management table. The DHCP server feeds these information to an input filter section having jurisdiction over packets sent from this line to thereby cause the input filter section to prepare a filter entry that allows passing of only such a packet in which a packet sender IP address, a packet sender MAC address, and a packet reception line number all agree to the registered ones. Therefore, when the IP address, the MAC address, and the line number of a packet sent thereafter all agree to the conditions given in the filter entry, the input filter section passes the packet.

Document US 2006/159100 A1 discloses a cable modem termination system (CMTS) including a DHCP relay agent for forwarding DHCP messages between DHCP clients arid DHCP servers. A DHCP relay agent may include functionality for an IP address/prefix-MAC mapping database. A CMTS may maintain this database in order to authenticate a device's IPv6 address or prefix and can use it to determine whether an IPv6 address belongs to a particular Media Access Control (MAC) address.

Document WO 2009/138034 A1 discloses a method for IPv6 addressing and packet filtering in broadband networks, comprising sending a dynamic host configuration protocol (DHCP) message comprising an Identity Association for Prefix Delegation Prefix option comprising a IPv6 prefix and a length of the IPv6 prefix to a device having a MAC address, receiving from the device a packet comprising a source MAC address and a source IPv6 address, and dropping the packet when the MAC address is equal to the source MAC address and the leftmost bits of the source IPv6 address defined by the length are not equal to the IPv6 prefix.

Document "The evolution from PPPoE to IPoE sessions", Horia Miclea, 4 December 2007, discloses DHCP Initiated IP session and IP Subscriber Transparent Auto Logon. It is assumed that DHCP DISCOVER is the first sign of life. Conditions may arise such as a user leaves his previous session with a long lease still outstanding. When he returns, his PC will just send packets using the existing address. The first IP packet will be treated as the session-start event, the system will correlate the MAC address (if available) against cached DHCP information. A RADIUS Access Request is sent by the system to the AAA Radius server, resulting in TAL-like (transparent auto logon) behavior. DHCP Offer, DHCP Request and DHCP Ack are then exchanged between the system and the user.

### SUMMARY OF THE INVENTION

Embodiments of the present invention provide a method, a device, and a system for identifying an IP session, capable of filtering an IP session by checking whether an IP session identity (ID) generated according to preset rules is added into the IP session, so that a coupling relation between a data communication process and an authentication process or an IP address configuration process of the IP session is established, and the security of the IP session is enhanced.

In order to achieve the above objective, in a first aspect, an embodiment of the present invention provides a method for identifying an IPv6 session, where the method includes:
performing, by a user equipment, UE, an Extensible Authentication Protocol, EAP, authentication with an authentication server via a network gateway;
wherein when the EAP authentication of the UE is successful, an EAP success message is sent to the UE by the authentication server via the network gateway;
after the EAP authentication, starting Dynamic Host Configuration Protocol Prefix Delegation, DHCP PD, and generating a DHCP Transaction ID by the UE;
requesting, by the UE, an IPv6 address prefix through the DHCP PD, wherein during the IPv6 address prefix PD process the DHCP Transaction ID remains unchanged;
wherein when the IPv6 address prefix PD is successful, the DHCP server sends an IPv6 address prefix to the UE with a DHCP reply message;
setting the IPv6 address prefix by the UE and the network gateway delegated by the DCHP replay message as a IPv6 session ID;
wherein a IPv6 session represents a network access connection session associated with an IPv6 address of the UE; and
filtering at the network gateway a received IPv6 session packet from the UE according to the IPv6 session ID;
wherein the filtering the received IPv6 session packet from the UE according to the IPv6 session ID comprises:
   determining whether the IPv6 session ID and an access port of the UE are consistent with a preset binding relation table;
   if the IPv6 session ID and the access port of the UE are consistent with the preset binding relation table, permitting the IPv6 session packet to pass; if the IPv6 session ID and the access port of the UE are not consistent with the preset binding relation table, discarding the IPv6 session packet.

In a second aspect, an embodiment of the present invention also provides a network gateway, where the network gateway includes:
wherein the network gateway is configured to perform an Extensible Authentication Protocol, EAP, authentication with an authentication server and a user equipment, UE, wherein further the network gateway is configured receive a EAP success message from the authentication server and subsequently forward the EAP success message to the UE;
wherein, after the EAP authentication, the network gateway is configured to receive a request for a IPv6 address prefix containing a DHCP Transaction ID generated by the UE and is further configured to forward this request to a DHCP server;
wherein when the IPv6 address prefix PD is successful, the network gateway is configured to receive an IPv6 address prefix from the DHCP server and forward the IPv6 address prefix to the UE through a DHCP reply message, wherein during the IPv6 address PD process the DHCP Transaction ID remains unchanged;
wherein the network gateway further comprises:
   a generating module, configured to set the IPv6 address prefix as an IPv6 session identity, wherein the IPv6 session represents a network access connection session associated with an IPv6 address of the UE; and
   a processing module, configured to filter a received IPv6 session packet from the UE according to the IPv6 session ID;
   wherein the processing module comprises:
      a determining sub-module, configured to determine whether the IPv6 session ID and an access port of the User Equipment, UE, are consistent with a preset binding relation table; and
      a filtering sub-module, configured to permit the packet to pass, if the determining sub-module determines that the IPv6 session ID and the access port of the UE are consistent with the preset binding relation table; and discard the packet, if the determining sub-module determines that the IPv6 session ID and the access port of the UE are not consistent with the preset binding relation table.

In a third aspect, an embodiment of the present invention further provides a system for processing an IPv6 session, where the system includes a UE and a network gateway as mentioned above according to the second aspect,
the UE is configured to perform an Extensible Authentication Protocol, EAP, authentication with an authentication server and the network gateway, wherein the UE is configured receive the EAP success message from the network gateway;
wherein the UE is further configured to start Dynamic Host Configuration Protocol Prefix Delegation, DHCP PD, and generate a DHCP Transaction ID;
wherein furthermore the UE is configured to receive an IPv6 address prefix through a DHCP reply message;
wherein the UE is further configured to set the IPv6 address prefix as a IPv6 session ID;
wherein furthermore the UE is configured to send an IPv6 session packet to the network gateway.

The technical solutions according to the embodiments of the present invention have the following advantages: a method for filtering an IP session is implemented by checking whether an IP session ID generated according to preset rules is added into the IP session, so that a coupling relation between a data communication process and an authentication process or an IP address configuration process of the IP session is established, and the security of the IP session is enhanced.

### Brief description of the drawings

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a schematic flow chart of a method for identifying an IP session according to a first example which is not part of the present invention;
FIG. 2 is a schematic flow chart of a method for identifying an IP session according to the first example;
FIG. 3 is a schematic structural diagram of a system for processing an IP session according to a second example which is not part of the present invention;
FIG. 4 is a schematic flow chart of a method for identifying an IP session in a dynamic IPv6 session according to Embodiment 1 of the present invention;
FIG. 5 is a schematic flow chart of another method for identifying an IP session in a dynamic IPv6 session according to a third example which is not part of the present invention;
FIG. 6 is a schematic flow chart of another method for identifying an IP session in a dynamic IPv6 session according to a fourth example which is not part of the present invention;
FIG. 7 is a schematic flow chart of another method for identifying an IP session in a dynamic IPv6 session according to a fifth example which is not part of the present invention;
FIG. 8 is a schematic flow chart of another method for identifying an IP session in a dynamic IPv6 session according to a sixth example which is not part of the present invention; and
FIG. 9 is a schematic flow chart of a method for identifying an IP session in a static IPv6 session according to a seventh example which is not part of the present invention.

### DETAILED DESCRIPTION OF THE EMBODIMENTS

Embodiments of the present invention provide a method, a device, and a system for identifying an IP session. The technical solution includes the following content: An IPv6 session ID field is set in an IPv6 flow label, or an IPv6 session ID field (for example, an IPv6 address prefix) is set in an IPv6 address. After a subscriber authentication or an IP address configuration process succeeds, an IPv6 session ID is generated according to rules agreed by the subscriber and the operator, to realize coupling of the IPv6 session with the authentication process or with the IP address configuration process.

The IPv6 session ID remains unchanged during a keepalive process of the IP session, a BNG filters the received data packet according to the IPv6 session ID, to effectively prevent an attacker from impersonating a valid sender by forging an IP address or a MAC address. Therefore, the security of shared medium access is ensured.

The technical solutions of the present invention will be clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

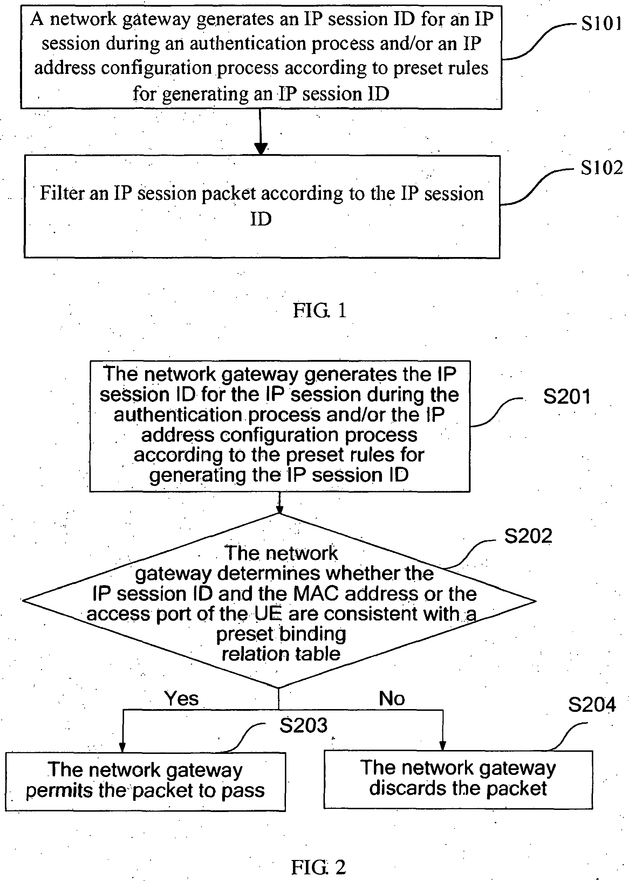

FIG. 1 is a schematic flow chart of a method for identifying an IP session according to a first example which is not part of the present invention. Referring to FIG. 1, the method includes the following steps.

In step S101, a network gateway generates an IP session ID for an IP session during an authentication process and/or an IP address configuration process according to preset rules for generating the IP session ID.

The IPv6 sessions are classified into dynamic IPv6 sessions and static IPv6 sessions.

The dynamic IPv6 sessions may be dynamically established and terminated, and the static IPv6 sessions may only be statically configured and generated.

The technical solution of the first example includes setting an IPv6 session ID field in an IPv6 flow label not forming part of the invention, or setting an IPv6 session ID field (for example, an IPv6 address prefix) in an IPv6 address. As for a dynamic IP session, an IP session ID may be generated for the IP session during the authentication process and the IP address configuration process, which includes: performing mapping to the IPv6 session ID field of the IPv6 Flow label according to agreed rules through an authentication session ID and a Dynamic Host Configuration Protocol Transaction ID (DHCP Transaction ID, xid), to generate an IPv6 session ID. As for the dynamic IP session, an IP session ID may also be generated for the IP session during the authentication process and the IP address configuration process, which includes: mapping an IPv6 address prefix of a Subscriber obtained through DHCP Prefix Delegation (PD) or StateLess Address AutoConfiguration (SLAAC) according to agreed rules to serve as an IPv6 session ID, that is, binding the IPv6 address prefix of the Subscriber and the IPv6 session. As for a static IP session, an IPv6 session ID may be generated according to agreed rules and according to an IPv6 address/IPv6 address prefix.

Based on the IPv6 session ID (for example, the IPv6 address prefix), an IP edge node may authorize the IPv6 session according to the IPv6 session ID, in which the authorization of the IPv6 session is generally implemented by using an Authentication, Authorization and Accounting (AAA) Protocol, and the IPv6 session ID (for example, the IPv6 address prefix) may be carried in an AAA message of the IPv6 session.

As for the dynamic IPv6 session, the rules for generating the IPv6 session ID may be dynamically configured onto a UE before the IPv6 session is set up, or is dynamically configure onto the UE through an authentication protocol/DHCP after the authentication/IP address configuration succeeds; as for the static IPv6 session, the rules for generating the IPv6 session ID may be configured statically, that is, before step S101, the following two situations exist:
When the IP session is a dynamic IP session, the rules for generating the IP session ID are set in the network gateway, and the rules for generating the IP session ID are set in the UE by sending an authentication acknowledgement message or an address configuration response message to the UE.
When the IP session is a static IP session, the rules for generating the IP session ID are set in the network gateway and the UE.

Corresponding to the two situations, the content of step S101 is classified into the following two situations:
When the IP session is the dynamic IP session, the IP session ID is generated for the IP session during the authentication process and/or the IP address configuration process according to the preset rules for generating the IP session ID, and according to an IP session address prefix obtained through address configuration PD or Router Advertisement (RA), an authentication identifier in the authentication acknowledgement message, or a transaction ID in the address configuration response message.
When the IP session is the static IP session, the IP session ID is generated for the IP session during the IP address configuration process according to the preset rules for generating the IP session ID and according to an IP session address or an IP session address prefix preset in the UE.

It should be further noted that, when the IP session is the dynamic IP session, after generating the IP session ID according to the transaction ID in the address configuration response message, the method further includes the following step:
When an IP address configuration result of the IP session is updated, an updated IP session ID is generated for the IP session according to the preset rules for generating the IP session ID and according to the transaction ID in an updated address configuration response message.

The IPv6 session ID remains unchanged during a keepalive process of the IP session.

The IPv6 session is identified by the IPv6 session ID.

In step S102, filter a received IP session packet according to the IP session ID.

Furthermore, when the IP session is a dynamic IP session, the method further includes the following step:
Release the IP session ID when the IP session is terminated.

Furthermore, in specific application environment, as shown in FIG. 2, step S102 may include the following steps.

In step S201, the network gateway generates the IP session ID for the IP session during the authentication process and/or the IP address configuration process according to the preset rules for generating the IP session ID.

The content of this step is the same as that in step S101, so the details will not be describe herein again.

In step S202, the network gateway determines whether the IP session ID and a MAC address or access port of the UE are consistent with a preset binding relation table.

In this step, the network gateway determines whether the corresponding relation between the MAC address or the access port of the UE and the IP session ID is consistent with information in the preset binding relation table, and determines whether a packet of a received IP session is from a preset MAC address or access port, that is, determines whether the IP session is an IP session initiated by an authenticated port and satisfying authentication requirements.

The binding relation table is a binding relation table of the IP session ID and the MAC address or the access port of the UE generated when the UE completes the authentication.

The access port may be an access physical port (for example, a digital subscriber line port or a Passive Optical Network physical interface) or an access logical port (for example, a Virtual Local Area Network (VLAN) port or a Gigabit Passive Optical Network encapsulation mode port).

If the network gateway determines that the IP session ID and the MAC address or the access port of the UE are consistent with the preset binding relation table, step S203 is performed.

If the network gateway determines that the IP session ID and the MAC address or the access port of the UE are not consistent with the preset binding relation table, step S204 is performed.

In step S203, the network gateway permits the packet to pass.

That is, the UE that sends the packet is an authenticated UE, the packet is secure, and the packet is permitted to pass.

In step S204, the network gateway discards the packet.

That is, the UE that sends the packet is not an authenticated UE, and as the security of the packet is unknown, the packet is discarded.

Furthermore, when the IP session is a dynamic IP session, the method further includes the following step:
Release the IP session ID when the IP session is terminated.

The technical solution according to the first example has the following advantages: the method for filtering the IP session is implemented by checking whether the IP session ID generated according to the preset rules is added into the IP session, so that a coupling relation between a data communication process and an authentication process or an IP address configuration process of the IP session is established, and the security of the IP session is enhanced.

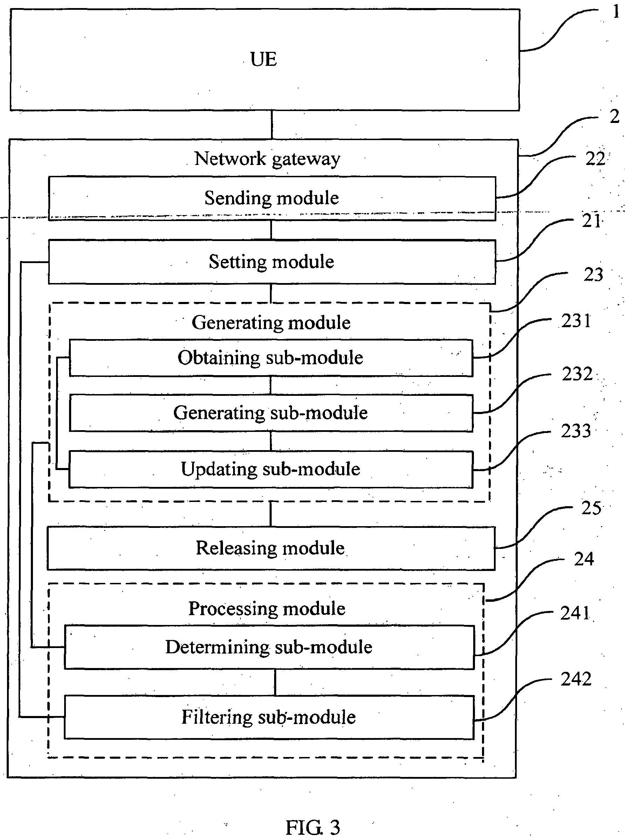

Corresponding to the technical solution of example 1 of the present invention, a second example which is not part of the present invention provides a system for processing an IP session. FIG. 3 is a schematic structural diagram of a system for processing an IP session according to example 2 of the present invention. Referring to FIG. 3, the system includes a UE 1 and a network gateway 2.

The UE 1 is configured to receive the rules for generating the IP session ID sent by the network gateway 2, generate the corresponding IP session ID according to the rules for generating the IP session ID, and send the IP session packet to the network gateway 2. Furthermore, the UE 1 is also configured to set the IP session address or the IP session address prefix, to provide reference information for generating the IP session ID.

The network gateway 2 is configured to set the rules for generating the IP session ID, send the rules for generating the IP session ID to the UE 1, generate the IP session ID for the IP session during the authentication process and/or the IP address configuration process according to the rules for generating the IP session ID, and filter the IP session according to the IP session ID. The network gateway 2 includes a setting module 21, a sending module 22, a generating module 23, a processing module 24, and a releasing module 25.

The setting module 21 is configured to set the rules for generating the IP session ID and the binding relation table in the network gateway 2.

The sending module 22 is.configured to send the rules for generating the IP session ID set by the setting module 21 to the UE 1, so that the UE 1 sets the rules for generating the IP session ID.

The generating module 23 is configured to generate the IP session ID for the IP session during the authentication process and/or IP address configuration process according to the rules for generating the IP session ID preset by the setting module 21. The generating module includes an obtaining sub-module 231, a generating sub-module 232, and an updating sub-module 233.

The obtaining sub-module 231 is configured to obtain the IP session address prefix through the address configuration PD or the RA, obtain the authentication identifier in the authentication acknowledgement message, obtain the transaction ID in the address configuration response message, or obtain the IP session address or the IP session address prefix preset in the UE 1.

The generating sub-module 232 is configured to generate the IP session ID for the IP session according to the IP session address prefix, the authentication identifier, the transaction ID, or the IP session address or the IP session address prefix preset in the UE 1 obtained by the obtaining sub-module 231 and according to the rules for generating the IP session ID preset by the setting module 21.

The updating sub-module 233 is configured to generate an updated IP session ID for the IP session according to the rules for generating the IP session ID preset by the setting module 21 and according to the transaction ID in the updated address configuration response message obtained by the obtaining sub-module 231, when the IP address configuration result of the IP session is updated.

The processing module 24 is configured to filter the received IP session packet according to the IP session ID.

The processing module 24 may include a determining sub-module 241 and a filtering sub-module 242.

The determining sub-module 241 is configured to determine whether the IP session ID and the MAC address or the access port of the UE 1 are consistent with the binding relation table set by the setting module 21.

The filtering sub-module 242 is configured to permit the packet to pass, if the determining sub-module 241 determines that the IP session ID and the MAC address or the access port of the UE 1 are consistent with the preset binding relation table; and discard the packet, if the determining sub-module 241 determines that the IP session ID and the MAC address or the access port of the UE 1 are not consistent with the preset binding relation table.

The releasing module 25 is configured to release the IP session ID generated by the generating module 23 when the IP session is terminated.

The modules may be distributed in a device, or distributed in multiple devices. The modules may be combined into one module, or may be further disassembled into multiple sub-modules.

The technical solution according to this second example has the following advantages: the system for filtering the IP session is implemented by checking whether the IP session ID generated according to the preset rules is added into the IP session, so that the IP session establishes the coupling relation during the data communication process and the authentication process/IP address configuration process, and the security of the IP session is enhanced.

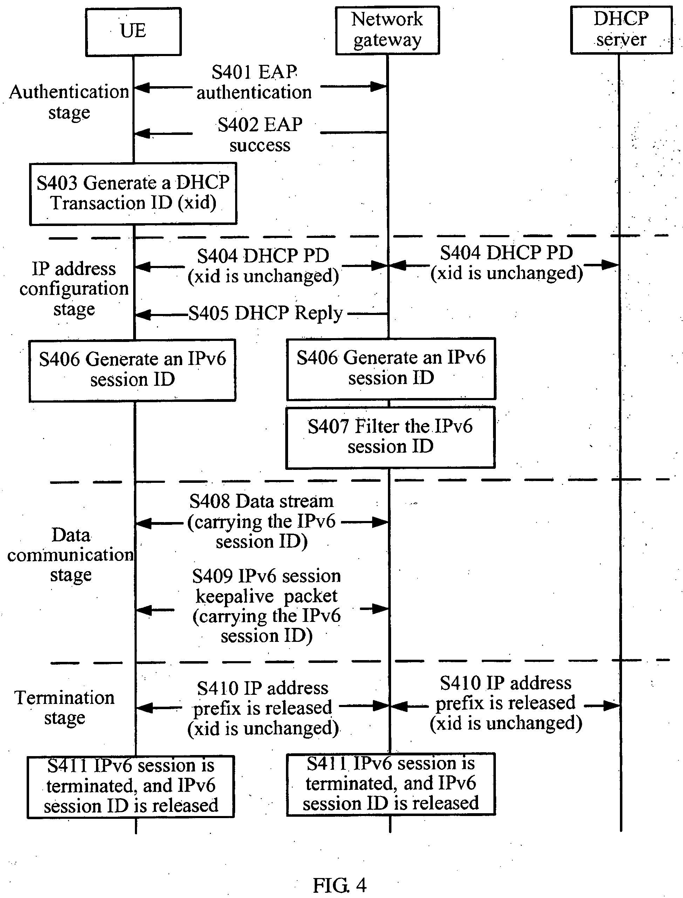

Embodiment 1 of the present invention provides a method for identifying an IP session in a dynamic IPv6 session, in which the IP session ID is created in an authentication stage. FIG. 4 is a flow chart of the method. Referring to FIG. 4, the method includes the following steps:

In step S401, the User/Subscriber Equipment (UE) performs the Extensible Authentication Protocol (EAP) authentication on an authentication server through the BNG.

The BNG is the network gateway described in the previous examples, and the UE is a Subscriber in the specific application environment. Specifically, the UE may be an access subscriber terminal, or a network access device connected to multiple terminals such as an HGW, which is the same in the subsequent embodiments, the details will not be described in the subsequent embodiments again, and different names do not influence the protection scope of the present invention.

In step S402, when the EAP authentication of the UE succeeds, an EAP Success message is sent to the UE by the authentication server through the BNG, and the rules for generating the IPv6 session ID is configured in the UE corresponding to the subscriber.

In step S403, after the EAP authentication of the UE succeeds, the UE starts DHCP PD, and generates a DHCP Transaction ID (referred to as xid in shoot). The UE may generate the xid according to certain rules and according to an EAP Identifier of the EAP Success message, and if the Protocol for carrying Authentication for Network Access (PANA) is adopted, the UE may generate the xid according to certain rules and according to a PANA session ID.

In step S404, the UE requests an IPv6 address prefix through the DHCP PD, and during the IPv6 address PD process, the xid of all the DHCP messages remains unchanged.

It should be noted that, as the session ID negotiation process like PPP is not carried out before the DHCP PD process, the xid is deemed as equivalent to the IP session ID and remains consistent in the life cycle of the same IP session; and if the IPv6 address prefix renumbering is performed for the UE, it is considered that an old IP session is updated to a new IP session, and the xid will change with the new IP session.

In step S405, when the IPv6 address PD succeeds, the DHCP server sends the IPv6 address prefix to the UE through a DHCP Reply message.

In step S406, the BNG and the UE may take the IPv6 address prefix delegated by the DHCP Reply message as the IPv6 session ID.

That is to say, the IPv6 address prefix and the IPv6 session are bound; furthermore, the IPv6 session ID and the access port of the UE are bound to form a binding relation table.

It should be noted that, if the IPv6 address prefix renumbering is performed on the UE, it is considered that an old IP session is updated to a new IP session, and the IP session ID will be triggered by a new DHCP Reply message and generated with the new IPv6 address prefix renumbering.

In step S407, the BNG filters the IPv6 session ID of the received IPv6 packet.

The BNG filters the packet of the IP session according to the preset binding relation of the IPv6 session ID and the access port of the UE, that is, the BNG determines whether the received IP session packet is from the preset access port by checking the preset binding relation table.

When the network gateway determines that the received IP session packet is from the preset access port, it is determined that the UE that sends the packet is an authenticated UE, and the BNG permits the packet sent by the UE to pass.

When the network gateway determines that the received IP session packet is not from the preset access port, the BNG discards the packet.

Accordingly, when it is determined that the UE that sends the packet is not an authenticated UE, the BNG directly discards the packet. It should be further noted that, in the following examples, the process of the BNG filtering the IPv6 session ID of the received IPv6 packet is the same as this step, and the details will not be described again herein.

In step S408, data communication is performed by using the data stream carrying the IPv6 session ID.

In the data communication stage, the IPv6 data packets all carry the IPv6 session ID generated according to the rules for generating an IPv6 session ID determined after the authentication succeeds.

In step S409, data communication state keepalive monitoring is performed by using a keepalive packet carrying the IPv6 session ID.

The keepalive packets (for example, the BFD packets) of the IPv6 session all carry the IPv6 session ID generated according to the rules for generating the IPv6 session ID determined after the authentication succeeds.

It should be noted that, in a specific implementation environment, step S408 and step S409 have no certain sequence relation, and the change in the sequence of the two steps does not influence the protection scope of the present invention.

In step S410, the IPv6 address prefix is released or renumbered.

When the IPv6 address prefix is released or renumbered, it is considered that an old IP session is updated to a new IP session, that is, it is determined that the current IPv6 session is terminated.

In step S411, the IPv6 session ID is released.

The technical solution according to the embodiment of the present invention has the following advantages: the IP session is filtered by checking whether the IP session ID generated according to the preset rules is added into the IP session, so that a coupling relation between a data communication process and an authentication process or an IP address configuration process of the IP session is established, and the security of the IP session is enhanced.

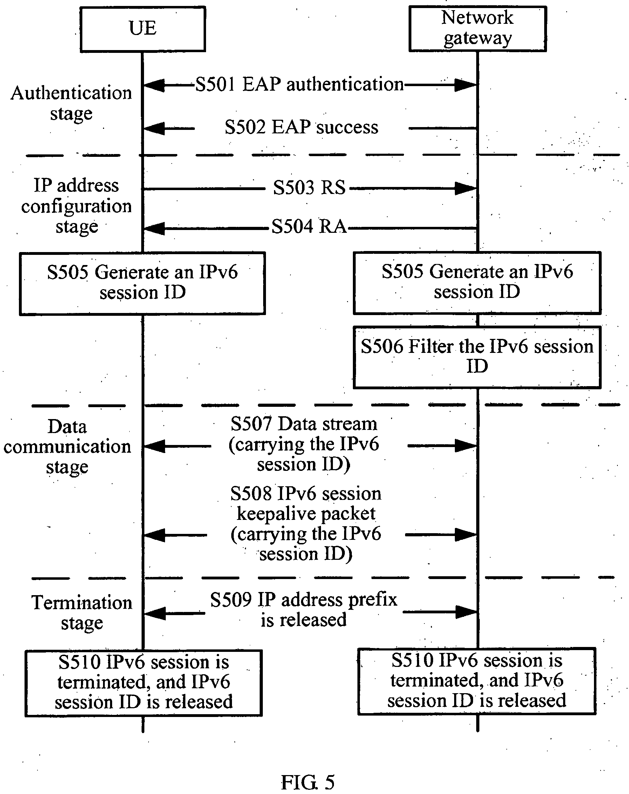

Corresponding to the technical solution of example 1 of the present invention, a third example which is not part of the present invention provides another method for identifying an IP session in a dynamic IPv6 session, in which an IP session ID is created during an IP address configuration stage. FIG. 5 is a flow chart of the method. Referring to FIG. 5, the method includes the following steps:
In step S501, the UE performs the EAP authentication on the authentication server through the BNG.

In step S502, when the EAP authentication of the UE succeeds, an EAP Success message is sent to the UE by the authentication server through the BNG, and rules for generating an IPv6 session ID are configured in the UE.

In step S503, when the EAP authentication of the UE succeeds, the UE starts an SLAAC, and sends a Router Solicitation (RS) message to the BNG.

In step S504, after receiving the RS message, the BNG sends an RA message to the UE.

A source address of the RA message is an IPv6 address of the BNG, and the RA message includes an IPv6 address prefix.

In step S505, the BNG and the UE use the IPv6 address prefix carried by the RA message as the IPv6 session ID.

That is, the IPv6 address prefix and the IPv6 session are bound. Furthermore, the IPv6 session ID and the UE MAC address or the access port are bound, to form a binding relation table.

It should be noted that, if IPv6 address prefix renumbering is performed on the UE, it is considered that an old IP session is updated to a new IP session, and the IP session ID will be triggered by the new RA message and generated with the new IPv6 address prefix renumbering.

In step S506, the BNG filters the IPv6 session ID of the received IPv6 packet.

In step S507, the data communication is performed by using the data stream carrying the IPv6 session ID.

In the data communication stage, the IPv6 data packets all carry the IPv6 session ID generated according to the rules for generating an IPv6 session ID determined after the authentication succeeds.

In step S508, the data communication state keepalive monitoring is performed by using a keepalive packet carrying the IPv6 session ID.

The keepalive packets (for example, the BFD packets) of the IPv6 session all carry the IPv6 session ID generated according to the rules for generating an IPv6 session ID determined after the authentication succeeds.

It should be noted that, in a specific implementation environment, step S507 and step S508 have no certain sequence relation, and the change in the sequence of the two steps does not influence the protection scope of the present invention.

In step S509, the IPv6 address prefix is released or renumbered.

When the IPv6 address prefix is released or renumbered, it is considered that an old IP session is updated to a new IP session, that is, it is determined that the current IPv6 session is terminated.

In step S510, the IPv6 session ID is released.

The technical solution according to this example has the following advantages: the method for filtering the IP session is implemented by checking whether the IP session ID generated according to the preset rules is added into the IP session, so that a coupling relation between a data communication process and an authentication process or an IP address configuration process of the IP session is established, and the security of the IP session is enhanced.

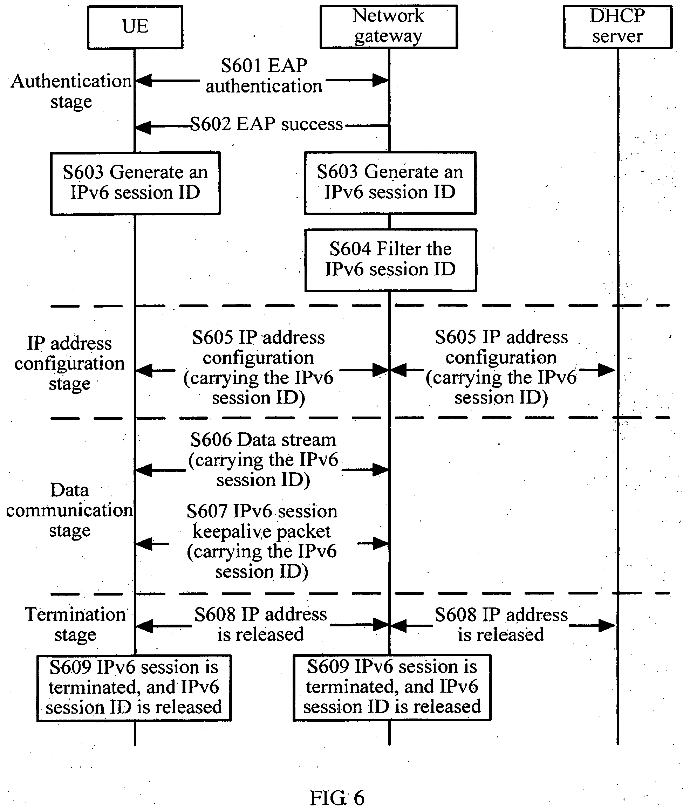

Corresponding to the technical solution of example 1 of the present invention, a fourth example which is not part of the present invention provides another method for identifying an IP session in a dynamic IPv6 session, in which an IP session ID is created during an IP address configuration stage. FIG. 6 is a flow chart of the method. Referring to FIG. 6, the method includes the following steps:
In step S601, the UE performs the EAP authentication on the authentication server through the BNG.
In step S602, when the EAP authentication of the UE succeeds, an EAP Success message is sent to the UE by the authentication server through the BNG, and rules for generating an IPv6 session ID are configured in the UE.
In step S603, the BNG and the UE generate an IPv6 session ID for the BNG and the UE respectively according to the rules for generating an IPv6 session ID.

The BNG and the UE may generate the IPv6 session ID according to certain rules and according to the EAP Identifier of the EAP Success message; and if the PANA is adopted, the IPv6 session ID may also be generated according to certain rules and according to the PANA session ID.

In step S604, the BNG filters the IPv6 session ID of the received IPv6 packet.

In step S605, the UE requests an IPv6 address in a stateless or stateful address configuration manner.

During the IPv6 address configuration process, all uplink messages carry the IPv6 session ID generated according to the rules for generating IPv6 session ID determined after the authentication succeeds.

In step S606, the data communication is performed by using the data stream carrying the IPv6 session ID.

In the data communication stage, the IPv6 data packets carry the IPv6 session ID generated according to the rules for generating IPv6 session ID after the authentication succeeds.

In step S607, the data communication state keepalive is performed by using a keepalive packet carrying the IPv6 session ID.

The keepalive packets (for example, the BFD packets) of the IPv6 session tall carry the IPv6 session ID generated according to the rules for generating IPv6 session ID determined after the authentication succeeds.

It should be noted that, in a specific implementation environment, step S606 and step S607 have no certain sequence relation, and the change in the sequence of the two steps does not influence the protection scope of the present invention.

In step S608, the IPv6 address is released.

In step S609, the IPv6 session is terminated, and the IPv6 session ID is released.

The technical solution according to this example has the following advantages: the method for filtering the IP session is implemented by checking whether the IP session ID generated according to the preset rules is added into the IP session, so that a coupling relation between a data communication process and an authentication process or an IP address configuration process of the IP session is established, and the security of the IP session is enhanced.

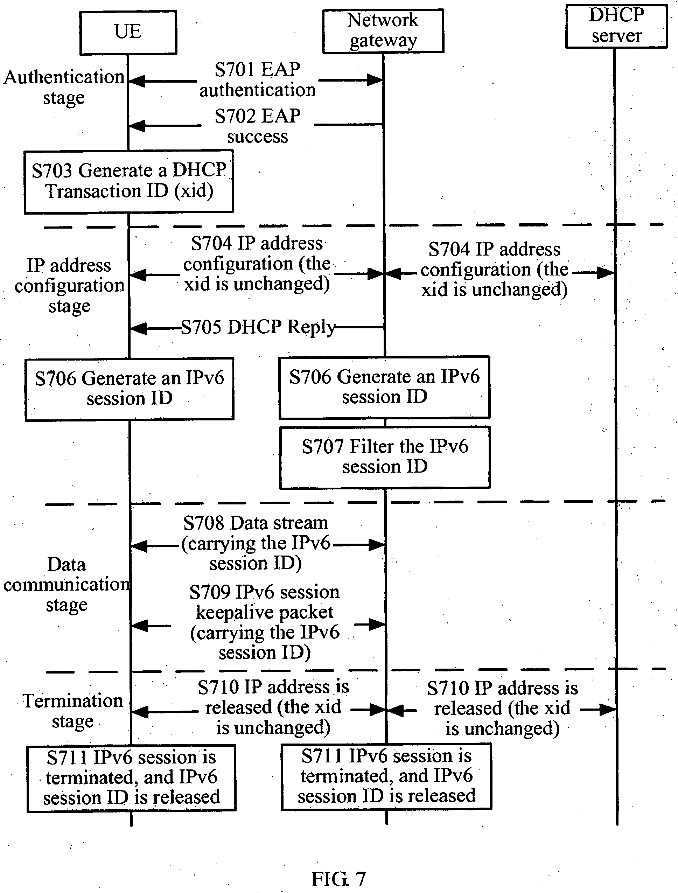

Corresponding to the technical solution of example 1 of the present invention, a fifth example which is not part of the present invention provides another method for identifying an IP session in a dynamic IPv6 session, in which the IP session ID is created in an IP address configuration stage. FIG. 7 is a flow chart of the method. Referring to FIG. 7, the method includes the following steps:
In step S701, the UE performs the EAP authentication on the authentication server through the BNG.

In step S702, when the EAP authentication of the UE succeeds, an EAP Success message is sent to the UE by the authentication server through the BANG, and rules for generating an IPv6 session ID are configured in the UE.

In step S703, after the EAP authentication of the UE succeeds, the UE starts a stateful address configuration, and generates a DHCP Transaction ID (referred to as xid); the UE may generate the xid according to certain rules and according to an EAP Identifier of the EAP Success message; and if the PAN A is adopted, the UE may generate the xid according to certain rules and according to a PANA session ID.

In step S704, the UE requests an IPv6 address through the stateful address configuration, and during the IPv6 address configuration process, the xid of all the DHCP messages remains unchanged.

It should be further noted that, as the session ID negotiation process like PPP is not carried out before the DHCP address configuration process, the xid is seemed as equivalent to the IP session ID, and it is suggested that the xid remains consistent in the life cycle of the same IP session; and if the IP address is changed through a reconfigure message in the DHCP process, it is considered that an old IP session is updated to a new IP session, and the xid will change with the new IP session.

In step S705, when the IPv6 address application succeeds, the DHCP server sends the IPv6 address to the UE through a DHCP Reply message.

In step S706, the BNG and the UE may generate an IPv6 session ID according to certain rules and according to the DHCP Transaction ID (xid) of the DHCP Reply message.

It should be further noted that, if the IP address is changed through a reconfigure/renew message in the DHCP process, it is considered that an old IP session is updated to a new IP session, and the IP session ID will be triggered by the new DHCP Reply message and generated with the new IP address renumbering.

In step S707, the BNG filters the IPv6 session ID of the received IPv6 packet.

In step S708, the data communication is performed by using the data stream carrying the IPv6 session ID.

In the data communication stage, the IPv6 data packets all carry the IPv6 session ID generated according to the rules for generating an IPv6 session-ID determined after the authentication succeeds.

In step S709, the data communication state keepalive monitoring is performed by using a keepalive packet carrying the IPv6 session ID.

The keepalive packets (for example, the BFD packets) of the IPv6 session all carry the IPv6 session ID generated according to the rules for generating an IPv6 session ID determined after the authentication succeeds.

It should be noted that, in a specific implementation environment, step S708 and step S709 have no certain sequence relation, and the change in the sequence of the two steps does not influence the protection scope of the present invention.

In step S710, the IPv6 address is released.

In step S711, the IPv6 session is terminated, and the IPv6 session ID is released.

The technical solution according to this example has the following advantages: the method for filtering the IP session is implemented by checking whether the IP session ID generated according to the preset rules is added into the IP session, so that a coupling relation between a data communication process and an authentication process or an IP address configuration process of the IP session is established, and the security of the IP session is enhanced.

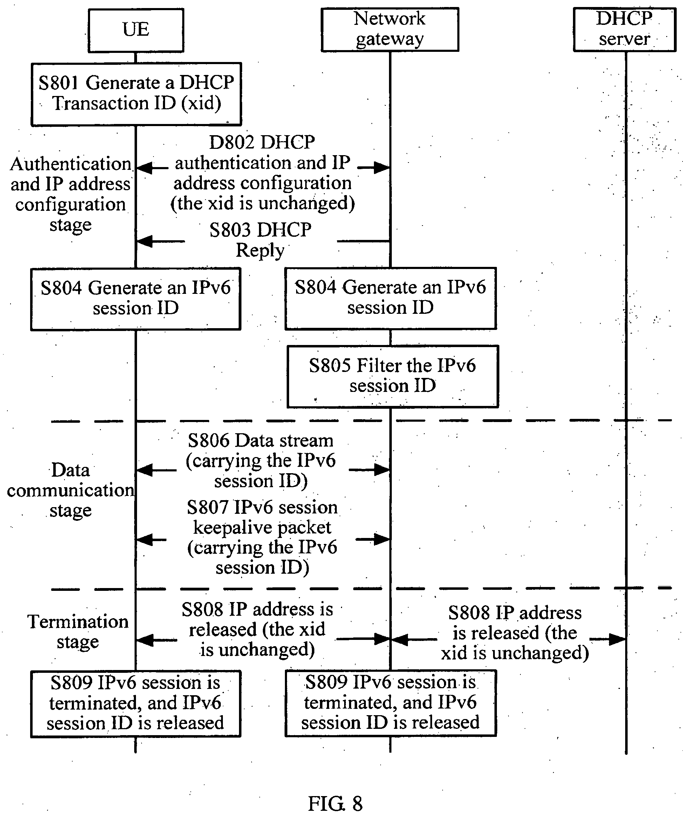

Corresponding to the technical solution of example 1 of the present invention, a sixth example which is not part of the present invention provides another method for processing an IP session, in which the IP address configuration stage and the authentication stage are combined, and the IP session ID is created in this stage. FIG. 8 is a flow chart of the method. Referring to FIG. 8, the method includes the following steps.

In step S801, the UE generates a DHCP Transaction ID (referred to as xid).

In step S802, the UE implements the UE authentication and stateful address configuration through DHCP authentication, and in the DHCP authentication process, the xid of all the DHCP messages remains unchanged.

It should be further noted that, as the session ID negotiation process like PPP is not carried out before the DHCP address configuration process, the xid is seemed as equivalent to the IP session ID, and it is suggested that the xid remains consistent in the life cycle of the same IP session; and if the IP address is changed through a reconfigure/renew message in the DHCP process, it is considered that an old IP session is updated to a new IP session, and the xid will change with the new IP session

In step S803, when the DHCP authentication succeeds, the BNG sends the IPv6 address to the UE through a DHCP Reply message, to notify the UE that the authentication succeeds, and rules for generating the IPv6 session ID are configured in the UE.

It should be further noted that, if the IP address is changed through the reconfigure/renew message in the DHCP process, it is considered that an old IP session is updated to a new IP session, and the IP session ID will be triggered by the new DHCP Reply message and generated with the new IP address renumbering.

In step S804, the BNG and the UE may generate an IPv6 session ID according the rules for generating the IPv6 session ID determined after the authentication succeeds and according to the DHCP Transaction ID of the DHCP Reply message.

It should be further noted that, if the IP address is changed through the reconfigure/renew message in the DHCP process, it is considered that an old IP session is updated to a new IP session, and the IP session ID will be triggered by the new DHCP Reply message and generated with the new IP address renumbering.

In step S805, the BNG filters the IPv6 session ID of the received IPv6 packet.

In step S806, the data communication is performed by using the data stream carrying the IPv6 session ID.

In the data communication stage, the IPv6 data packets all carry the IPv6 session ID generated according to the rules for generating IPv6 session ID determined after the authentication succeeds.

In step S807, the data communication state keepalive monitoring is performed by using a keepalive packet carrying the IPv6 session ID.

The keepalive packets (for example, the BFD packets) of the IPv6 session all carry the IPv6 session ID generated according to the rules for generating an IPv6 session ID determined after the authentication succeeds.

It should be noted that, in a specific implementation environment, step S806 and step S807 have no certain sequence relation, and the change in the sequence of the two steps does not influence the protection scope of the present invention.

In step S808, the IPv6address is released.

In step S809, the IPv6 session is terminated, and the IPv6 session ID is released.

The technical solution according to this example has the following advantages: the method for filtering the IP session is implemented by checking whether the IP session ID generated according to the preset rules is added into the IP session, so that a coupling relation between a data communication process and an authentication process or an IP address configuration process of the IP session is established, and the security of the IP session is enhanced.

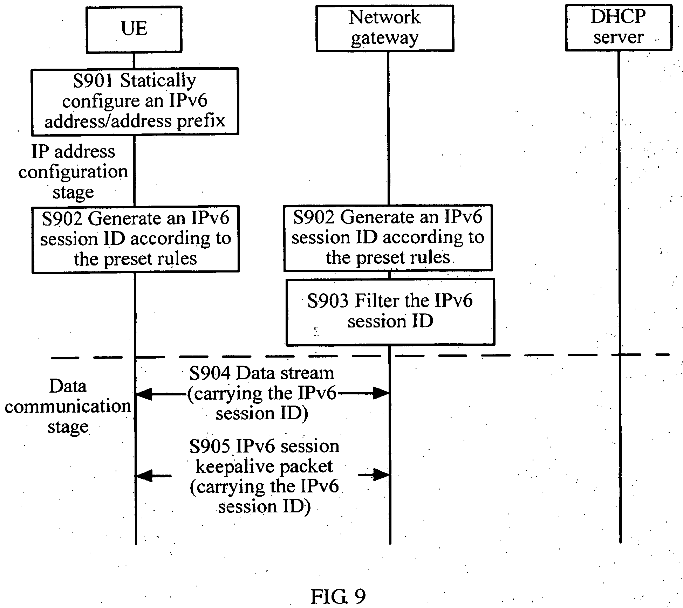

Corresponding to the technical solution of example 1 of the present invention, a seventh example which is not part of the present invention provides a method for processing an IP session in a static IPv6 session, in which as the IP session is a static IP session, the authentication stage does not exist, only the IP address configuration stage exists, and the IP session ID is created in this stage. FIG. 9 is a flow chart of the method. Referring to FIG. 9, the method includes the following steps.

In step S901, a network statically configures an IPv6 address/address prefix of the UE and rules for generating an IPv6 session ID.

In step S902, the BNG and the UE generate an IPv6 session ID according to the preset rules for generating the IPv6 session ID and according to the IPv6. address/address prefix of the UE.

In step S903, the BNG filters the received IPv6 packet according to the IPv6 session ID.

In step S904, the data communication is performed by using the data stream carrying the IPv6 session ID.

In the data communication stage, the IPv6 data packets all carry the IPv6 session ID generated according to the rules for generating an IPv6 session ID determined after the authentication succeeds.

In step S905, the data communication state keepalive monitoring is performed by using a keepalive packet carrying the IPv6 session ID.

The keepalive packets (for example, the BFD packets) of the IPv6 session all carry the IPv6 session ID generated according to the rules for generating the IPv6 session ID determined after the authentication succeeds.

It should be noted that, in a specific implementation environment, step S904 and step S905 have no certain sequence relation, and the change in the sequence of the two steps does not influence the protection scope of the present invention.

The technical solution according to this example has the following advantages: the method for filtering the IP session is implemented by checking whether the IP session ID generated according to the preset rules is added into the IP session, so that a coupling relation between a data communication process and an authentication process or an IP address configuration process of the IP session is established, and the security of the IP session is enhanced.

Through the above description of the above embodiments, it is clear to persons skilled in the art that the present invention may be accomplished through hardware, or through software plus a necessary universal hardware platform. Based on this, the technical solutions of the present invention may be embodied in the form of a software product. The software product may be stored in one or more nonvolatile storage media (for example, CD-ROM, USB flash drive, or removable hard disk) and contain several instructions configured to instruct computer equipment (for example, a personal computer, a server, or network equipment) to perform the method according to the embodiments of the present invention.

It should be understood by persons skilled in the art that the accompanying drawings are merely schematic diagrams of a preferred embodiment, and modules or processes in the accompanying drawings are not necessarily required to implement the present invention.

Exemplary embodiments of the present invention are described. It should be noted by persons of ordinary skill in the art that modifications and variations may be made without departing from the principle of the present invention, which should be construed as falling within the protection scope of the present invention.

## Claims

1. A method for identifying an Internet Protocol, IPv6, session, comprising:
performing, by a user equipment, UE, (1) an Extensible Authentication Protocol, EAP, authentication with an authentication server via a network gateway (2) (S401);
wherein when the EAP authentication of the UE (1) is successful, an EAP success message is sent to the UE (1) by the authentication server via the network gateway (2) (S402);
after the EAP authentication, starting Dynamic Host Configuration Protocol Prefix Delegation, DHCP PD, and generating a DHCP Transaction ID by the UE (2) (S403);
requesting, by the UE (2), an IPv6 address prefix through the DHCP PD, wherein during the IPv6 address prefix PD process the DHCP Transaction ID remains unchanged (S404);
wherein when the IPv6 address prefix PD is successful, the DHCP server sends an IPv6 address prefix to the UE (1) with a DHCP reply message (S405);
setting the IPv6 address prefix by the UE (1) and the network gateway (2) delegated by the DCHP replay message as a IPv6 session ID (S406);
wherein a IPv6 session represents a network access connection session associated with an IPv6 address of the UE (1); and
filtering, at the network gateway (2), a received IPv6 session packet from the UE (1) according to the IPv6 session ID (step 407);
wherein the filtering the received IPv6 session packet from the UE (1) according to the IPv6 session ID comprises:
determining whether the IPv6 session ID and an access port of the UE (1) are consistent with a preset binding relation table;
if the IPv6 session ID and the access port of the UE (1) are consistent with the preset binding relation table, permitting the IPv6 session packet to pass; if the IPv6 session ID and the access port of the UE (1) are not consistent with the preset binding relation table, discarding the IPv6 session packet.

2. The method for identifying an IP session according to claim 1, before the step of filtering a received IP session packet from the UE (1) according to the IP session ID, further comprising:
authorizing the IP session according to the IP session ID, if the IP session ID is carried in an Authentication, Authorization and Accounting, AAA, message of the IP session.

3. The method for identifying an IP session according to claim 1, wherein the method further comprises:
releasing the IPv6 session ID when the IPv6 address prefix is released or renumbered.

4. The method for identifying an IPv6 session according to any one of claims 2-3, wherein when the IPv6 session is the dynamic IPv6 session, the method further comprises:
releasing the IPv6 session ID when the IPv6 session is terminated.

5. A network gateway (2), wherein the network gateway (2)
is configured to perform an Extensible Authentication Protocol, EAP, authentication with an authentication server and a user equipment, UE, (1), wherein further the network gateway (2) is configured receive a EAP success message from the authentication server and subsequently forward the EAP success message to the UE (1);
wherein, after the EAP authentication, the network gateway (2) is configured to receive a request for a IPv6 address prefix containing a DHCP Transaction ID generated by the UE (1) and is further configured to forward this request to a DHCP server;
wherein when the IPv6 address prefix PD is successful, the network gateway is configured to receive an IPv6 address prefix from the DHCP server and forward the IPv6 address prefix to the UE through a DHCP reply message, wherein during the IPv6 address PD process the DHCP Transaction ID remains unchanged;
wherein the network gateway further comprises:
a generating module (23), configured to set the IPv6 address prefix as an IPv6 session identity, wherein the IPv6 session represents a network access connection session associated with an IPv6 address of the UE; and
a processing module (24), configured to filter a received IPv6 session packet from the UE according to the IPv6 session ID;
wherein the processing module (24) comprises:
a determining sub-module (241), configured to determine whether the IPv6 session ID and an access port of the User Equipment, UE, are consistent with a preset binding relation table; and
a filtering sub-module (242), configured to permit the packet to pass, if the determining sub-module determines that the IPv6 session ID and the access port of the UE are consistent with the preset binding relation table; and discard the packet, if the determining sub-module determines that the IPv6 session ID and the access port of the UE are not consistent with the preset binding relation table.

6. The network gateway according to claim 5, further comprising:
a releasing module (25), configured to release the IP session ID generated by the generating module when the IPv6 session is terminated.

7. A system for processing an IP session, comprising a User Equipment, UE (1) and a network gateway (2), wherein:
the network gateway (2) is a network gateway according to any one of claims 5 - 6;
the UE (1) is configured to perform an Extensible Authentication Protocol, EAP, authentication with an authentication server and the network gateway (2), wherein the UE is configured receive the EAP success message from the network gateway;
wherein the UE is further configured to start Dynamic Host Configuration Protocol Prefix Delegation, DHCP PD, and generate a DHCP Transaction ID;
wherein furthermore the UE is configured to receive an IPv6 address prefix through a DHCP reply message;
wherein the UE (1) is further configured to set the IPv6 address prefix as a IPv6 session ID;
wherein furthermore the UE (1) is configured to send an IPv6 session packet to the network gateway (2).

8. The system for processing an IP session according to claim 7, wherein the UE (1) and the network gateway (2) release the IPv6 session ID after the IPv6 session is terminated.

## Patentansprüche

1. Verfahren zum Identifizieren einer Internetprotokoll-v6-Sitzung, IPv6-Sitzung, das Folgendes umfasst:
Ausführen, durch ein Anwendergerät, UE, (1) einer Authentifizierung nach dem erweiterbaren Authentifizierungsprotokoll, EAP-Authentifizierung, mit einem Authentifizierungsserver über ein Netz-Gateway (2) (S401);
wobei dann, wenn die EAP-Authentifizierung des UE (1) erfolgreich ist, eine EAP-Erfolgsnachricht durch den Authentifizierungsserver über das Netz-Gateway (2) zu dem UE (1) gesendet wird (S402);
nach der EAP-Authentifizierung, Starten von Präfix-Delegation nach dem dynamischen Host-Konfigurationsprotokoll, DHCP PD, und Erzeugen einer DHCP-Transaktions-ID durch das UE (1) (S403);
Anfordern, durch das UE (1), eines IPv6-Adresspräfixes durch die DHCP PD, wobei die DHCP-Transaktions-ID während des IPv6-Adresspräfix-PD-Prozesses unverändert bleibt (S404);
wobei dann, wenn die IPv6-Adresspräfix-PD erfolgreich ist, der DHCP-Server das IPv6-Adresspräfix mit einer DHCP-Antwortnachricht zu dem UE (1) sendet (S405);
Einstellen des IPv6-Adresspräfixes durch das UE (1) und das Netz-Gateway (2), das durch die DHCP-Antwortnachricht delegiert ist, als eine IPv6-Sitzungs-ID (S406);
wobei die IPv6-Sitzung eine Netzzugangsverbindungssitzung, die einer IPv6-Adresse des UE (1) zugeordnet ist, repräsentiert; und
Filtern, in dem Netz-Gateway (2), eines IPv6-Sitzungspakets von dem UE (1) gemäß der IPv6-Sitzungs-ID (Schritt 407);
wobei das Filtern des von dem UE (1) empfangenen IPv6-Sitzungspakets gemäß der IPv6-Sitzungs-ID Folgendes umfasst:
Bestimmen, ob die IPv6-Sitzungs-ID und ein Zugangsanschluss des UE (1) mit einer voreingestellten Bindungsbeziehungstabelle konsistent sind;
falls die IPv6-Sitzungs-ID und der Zugangsanschluss des UE (1) mit der voreingestellten Bindungsbeziehungstabelle konsistent sind, Erlauben, dass das IPv6-Sitzungspaket passiert; falls die IPv6-Sitzungs-ID und der Zugangsanschluss des UE (1) nicht mit der voreingestellten Bindungsbeziehungstabelle konsistent sind, Verwerfen des IPv6-Sitzungspakets;
wobei die IPv6-Sitzungs-ID ein IPv6-Adresspräfix des IP-Sitzungspakets ist.

2. Verfahren zum Identifizieren einer IP-Sitzung nach Anspruch 1, wobei das Verfahren vor dem Schritt des Filterns eines empfangenen IP-Sitzungspakets von dem UE (1) gemäß der IP-Sitzungs-ID ferner Folgendes umfasst:
Autorisieren der IP-Sitzung gemäß der IP-Sitzungs-ID, falls die IP-Sitzungs-ID in einer Authentifizierungs-, Autorisierungs- und Abrechnungs-Nachricht, AAA-Nachricht, der IP-Sitzung geführt ist.

3. Verfahren zum Identifizieren einer IP-Sitzung nach Anspruch 1, wobei das Verfahren ferner Folgendes umfasst:
Freigeben der IPv6-Sitzungs-ID, wenn das IPv6-Adresspräfix freigegeben oder neu nummeriert wird.

4. Verfahren zum Identifizieren einer IPv6-Sitzung nach einem der Ansprüche 2-3, wobei das Verfahren, dann, wenn die IPv6-Sitzung die dynamische IPv6-Sitzung ist, ferner Folgendes umfasst:
Freigeben der IPv6-Sitzungs-ID, wenn die IPv6-Sitzung beendet wird.

5. Netz-Gateway (2), wobei das Netz-Gateway (2)
konfiguriert ist, eine Authentifizierung nach dem erweiterbaren Authentifizierungsprotokoll, EAP-Authentifizierung, mit einem Authentifizierungsserver und einem Anwendergerät, UE, (1) auszuführen, wobei das Netz-Gateway (2) ferner konfiguriert ist, eine EAP-Erfolgsnachricht von dem Authentifizierungsserver zu empfangen und nachfolgend die EAP-Erfolgsnachricht zu dem UE (1) weiterzuleiten;
wobei, nach der EAP-Authentifizierung, das Netz-Gateway (2) konfiguriert ist, eine Anforderung für ein IPv6-Adresspräfix zu empfangen, die eine DHCP-Transaktions-ID enthält, die durch das UE (1) erzeugt ist, und ferner konfiguriert ist, diese Anforderung zu einem DHCP-Server weiterzuleiten;
wobei, wenn die IPv6-Adresspräfix-PD erfolgreich ist, das Netz-Gateway konfiguriert ist, ein IPv6-Adresspräfix von dem DHCP-Server zu empfangen und das IPv6-Adresspräfix zu dem UE durch eine DHCP-Antwortnachricht weiterzuleiten,
wobei die DHCP-Transaktions-ID während des IPv6-Adress-PD-Prozesses unverändert bleibt;
wobei das Netz-Gateway ferner Folgendes umfasst:
ein Erzeugungsmodul (23), das konfiguriert ist, das IPv6-Adresspräfix als eine IPv6-Sitzungskennung einzustellen, wobei die IPv6-Sitzung eine Netzzugangsverbindungssitzung repräsentiert, die einer IPv6-Adresse des UE zugeordnet ist; und
ein Verarbeitungsmodul (24), das konfiguriert ist, ein empfangenes IPv6-Sitzungspaket von dem UE gemäß der IPv6-Sitzungs-ID zu filtern;
wobei das Verarbeitungsmodul (24) Folgendes umfasst:
ein Bestimmungsuntermodul (241), das konfiguriert ist zu bestimmen, ob die IPv6-Sitzungs-ID und ein Zugangsanschluss des Anwendergeräts, UE, mit einer voreingestellten Bindungsbeziehungstabelle konsistent sind; und
ein Filterungsuntermodul (242), das konfiguriert ist, zu erlauben, dass das Paket passiert, falls das Bestimmungsuntermodul bestimmt, dass die IPv6-Sitzungs-ID und der Zugangsanschluss des UE mit der voreingestellten Bindungsbeziehungstabelle konsistent sind; und das Paket zu verwerfen, falls das Bestimmungsuntermodul bestimmt, dass die IPv6-Sitzungs-ID und der Zugangsanschluss des UE nicht mit der voreingestellten Bindungsbeziehungstabelle konsistent sind;
wobei die IPv6-Sitzungs-ID ein IPv6-Adresspräfix des IPv6-Sitzungspakets ist.

6. Netz-Gateway nach Anspruch 5, das ferner Folgendes umfasst:
ein Freigabemodul (25), das konfiguriert ist, die IP-Sitzungs-ID, die durch das Erzeugungsmodul erzeugt ist, freizugeben, wenn die IPv6-Sitzung beendet wird.

7. System zum Verarbeiten einer IP-Sitzung, das ein Anwendergerät, UE, (1) und ein Netz-Gateway (2) umfasst, wobei:
das Netz-Gateway (2) ein Netz-Gateway nach einem der Ansprüche 5-6 ist;
das UE (1) konfiguriert ist, eine Authentifizierung nach dem erweiterbaren Authentifizierungsprotokoll, EAP-Authentifizierung, mit einem Authentifizierungsserver und dem Netz-Gateway (2) auszuführen, wobei das UE konfiguriert ist, eine EAP-Erfolgsnachricht von dem Netz-Gateway zu empfangen;
wobei das UE ferner konfiguriert ist, Präfix-Delegation nach dem dynamischen Host-Konfigurationsprotokoll, DHCP PD, zu starten und eine DHCP-Transaktions-ID zu erzeugen;
wobei das UE darüber hinaus konfiguriert ist, ein IPv6-Adresspräfix durch eine DHCP-Antwortnachricht zu empfangen;
wobei das UE (1) ferner konfiguriert ist, das IPv6-Adresspräfix als eine IPv6-Sitzungs-ID einzustellen;
wobei darüber hinaus das UE (1) konfiguriert ist, ein IPv6-Sitzungspaket zu dem Netz-Gateway (2) zu senden.

8. System zum Verarbeiten einer IP-Sitzung nach Anspruch 7, wobei das UE (1) und das Netz-Gateway (2) die IPv6-Sitzungs-ID freigeben, nachdem die IPv6-Sitzung beendet ist.

## Revendications

1. Procédé d'identification d'une session au protocole Internet, IPv6, comprenant :
l'exécution, par un équipement utilisateur, UE, (1) d'une authentification au protocole d'authentification extensible, EAP, avec un serveur d'authentification par l'intermédiaire d'une passerelle de réseau (2) (S401),
dans lequel un message de réussite au protocole EAP est envoyé à l'équipement utilisateur UE (1) par le serveur d'authentification via la passerelle de réseau (2) lorsque que l'authentification de l'équipement utilisateur UE (1) au protocole EAP est réussie (S402),
le démarrage, après l'authentification au protocole EAP, d'une délégation de préfixe au protocole dynamique de configuration hôte, DHCP PD, et la génération d'un identificateur ID de transaction au protocole DHCP par l'équipement utilisateur UE (1) (S403),
la demande, par l'équipement utilisateur UE (1), d'un préfixe d'adresse au protocole IPv6 par l'intermédiaire de la délégation DHCP PD, l'identificateur ID de transaction au protocole DHCP demeurant inchangé pendant le traitement de délégation PD du préfixe d'adresse au protocole IPv6 (S404),
dans lequel, le serveur DHCP envoie le préfixe d'adresse au protocole IPv6 à l'équipement utilisateur UE (1) avec un message de réponse au protocole DHCP lorsque la délégation PD de préfixe d'adresse au protocole IPv6 est réussie (S405),
l'établissement du préfixe adresse au protocole IPv6 par l'équipement utilisateur UE (1) et la passerelle de réseau (2) délégués par le message de réponse au protocole DHCP comme étant un identificateur ID de session au protocole IPv6 (S406),
une session au protocole IPv6 représentant une session de connexion d'accès à un réseau associée à une adresse au protocole IPv6 de l'équipement utilisateur UE (1), et le filtrage au niveau de la passerelle de réseau (2) d'un paquet de session au protocole IPv6 reçu en provenance de l'équipement utilisateur UE (1) en fonction de l'identificateur ID de session au protocole IPv6 (étape 407),
dans lequel le filtrage du paquet de session au protocole IPv6 reçu de l'équipement utilisateur UE (1) en fonction de l'identificateur ID de session au protocole IPv6 comprend :
la détermination de ce que l'identificateur ID de session au protocole IPv6 et un port d'accès de l'équipement utilisateur UE (1) sont cohérents avec une table de relations de liaisons prédéterminée,
l'autorisation de passage du paquet de session au protocole IPv6, si l'identificateur ID de session au protocole IPv6 et le port d'accès de l'équipement utilisateur UE (1) sont cohérents avec la table de relations de liaisons prédéterminée ; le rejet du paquet de session au protocole IPv6 si l'identificateur ID de session au protocole IPv6 et le port d'accès de l'équipement utilisateur UE (1) ne sont pas cohérents avec la table de relations de liaisons prédéterminée,
dans lequel l'identificateur ID de session au protocole IPv6 est un préfixe d'adresse au protocole IPv6 du paquet de session au protocole IP.

2. Procédé d'identification d'une session au protocole IP selon la revendication 1 comprenant en outre, avant l'étape de filtrage d'un paquet de session au protocole IP reçu en provenance de l'équipement utilisateur UE (1) en fonction de l'identificateur ID de session au protocole IP :
l'autorisation de la session au protocole IP en fonction de l'identificateur ID de session au protocole IP, si l'identificateur ID de session au protocole IP est transporté dans un message d'authentification, autorisation, comptabilité, AAA, de la session au protocole IP.

3. Procédé d'identification d'une session au protocole IP selon la revendication 1, le procédé comprenant en outre :
la libération de l'identificateur ID de session au protocole IPv6 lorsque le préfixe d'adresse au protocole IPv6 est libéré ou renuméroté.

4. Procédé d'identification d'une session au protocole IPv6 selon l'une quelconque des revendications 2 ou 3, le procédé comprenant en outre, lorsque la session au protocole IPv6 est la session dynamique au protocole IPv6 :
la libération de l'identificateur ID de session au protocole IPv6 lorsque la session au protocole IPv6 est terminée.

5. Passerelle de réseau (2), dans laquelle la passerelle de réseau (2) est configurée pour effectuer une authentification au protocole d'authentification extensible, EAP, avec un serveur d'authentification et un équipement utilisateur, UE, (1), la passerelle de réseau (2) étant configurée pour recevoir un message de réussite au protocole EAP provenant du serveur d'authentification et ensuite transférer le message de réussite au protocole EAP à l'équipement utilisateur UE (1),
la passerelle de réseau (2) étant configurée, après l'authentification au protocole EAP, pour recevoir une demande concernant un préfixe d'adresse au protocole IPv6 contenant un identificateur ID de transaction au protocole DHCP généré par l'équipement utilisateur UE (1), et étant de plus configurée pour transférer cette demande à un serveur au protocole DHCP,
la passerelle de réseau étant configurée pour recevoir, lorsque la délégation PD de préfixe d'adresse au protocole IPv6 est réussie, un préfixe d'adresse au protocole IPv6 en provenance du serveur au protocole DHCP et pour transférer le préfixe d'adresse au protocole IPv6 à l'équipement utilisateur UE par l'intermédiaire d'un message de réponse au protocole DHCP, l'identificateur ID de transaction au protocole DHCP restant inchangé pendant le traitement de la délégation PD d'adresse au protocole IPv6,
la passerelle de réseau comprenant en outre :
un module de génération (23) configuré pour établir le préfixe d'adresse au protocole IPv6 comme étant une identité de session au protocole IPv6, la session au protocole IPv6 représentant une session de connexion d'accès au réseau associée à une adresse au protocole IPv6 de l'équipement utilisateur UE, et
un module de traitement (24) configuré pour filtrer un paquet de session au protocole IPv6 reçu en provenance de l'équipement utilisateur UE en fonction de l'identificateur ID de session au protocole IPv6,
le module de traitement (24) comprenant :
un sous module de détermination (241) configuré pour déterminer si l'identificateur ID de session au protocole IPv6 et un port d'accès de l'équipement utilisateur, UE, sont cohérents avec une table de relations de liaisons prédéterminée, et
un sous module de filtrage (242) configuré pour autoriser le passage du paquet si le sous module de détermination définit que l'identificateur ID de session au protocole IPv6 et le port d'accès de l'équipement utilisateur UE sont cohérents avec la table de relations de liaisons prédéterminée ; et pour rejeter le paquet si le module de détermination définit que l'identificateur ID de session au protocole IPv6 et le port d'accès de l'équipement utilisateur UE ne sont pas cohérents avec la table de relations de liaisons prédéterminée,
l'identificateur ID de session au protocole IPv6 étant un préfixe d'adresse au protocole IPv6 du paquet de session au protocole IPv6.

6. Passerelle de réseau selon la revendication 5, comprenant en outre :
un module de libération (25) configuré pour libérer l'identificateur ID de session au protocole IP généré par le module de génération lorsque la session au protocole IPv6 est terminée.

7. Système de traitement d'une session au protocole IP, comprenant un équipement utilisateur, UE, (1) et une passerelle de réseau (2), dans lequel :
la passerelle de réseau (2) est une passerelle de réseau conforme à l'une quelconque des revendications 5 ou 6,
l'équipement utilisateur UE (1) est configuré pour effectuer une authentification au protocole d'authentification extensible, EAP, avec un serveur d'authentification et la passerelle de réseau (2), l'équipement utilisateur UE étant configuré pour recevoir le message de réussite au protocole EAP en provenance de la passerelle de réseau,
l'équipement utilisateur UE étant en outre configuré pour démarrer une délégation de préfixe au protocole dynamique de configuration hôte, DHCP PD, et pour générer un identificateur ID de transaction au protocole DHCP,
l'équipement utilisateur UE étant en outre configuré pour recevoir un préfixe d'adresse au protocole IPv6 par l'intermédiaire d'un message de réponse au protocole DHCP,
l'équipement utilisateur UE (1) étant en outre configuré pour établir le préfixe d'adresse au protocole IPv6 comme étant l'identificateur ID de session au protocole IPv6,
l'équipement utilisateur UE (1) étant en outre configuré pour envoyer un paquet de session au protocole IPv6 à la passerelle de réseau (2).

8. Système de traitement d'une session au protocole IP selon la revendication 7, dans lequel l'équipement utilisateur UE (1) et la passerelle de réseau (2) libèrent l'identificateur ID de session au protocole IPv6 après que la session au protocole IPv6 est terminée.
